# EUROPEAN PATENT APPLICATION

(11) **EP 4 671 608 A1**
(43) Date of publication of application: **31.12.2025**
(21) Application number: 23924273.8
(22) Date of filing: 28.12.2023
(51) Int. Cl.: F21S 43/241, F21S 43/14, F21W 103/20, F21Y 115/10

(54) **VEHICLE LAMP DEVICE**

(30) Priority: 20.02.2023 JP 2023024252; 20.02.2023 JP 2023024235
(71) Applicant: Mitsuba Corporation, Kiryu-shi Gunma 376-8555 (JP)
(72) Inventor: UCHIDA Jun, Kiryu-shi, Gunma 376-8555 (JP)
(74) Representative: Becker Kurig & Partner Patentanwälte mbB
(86) International application number: PCT/JP2023/047314
(87) International publication number: WO 2024/176632

(57) **Abstract**

Provided is a vehicle lamp device capable of efficiently emitting light from the entire area of an output surface of a light guide member. The vehicle lamp device comprises a light source and a light guide member 11. The light guide member 11 includes an input portion 17, an output wall 18, an intermediate light guide wall 19, a first reflection surface 20, and a second reflection surface 21. One end side in a vehicle front-rear direction of the output wall 18 constitutes an output surface. The first reflection surface 20 causes light entering the input portion 17 to be radially internally reflected as first parallel light travelling toward the other end side of the output wall 18. The second reflection surface 21 is defined into a plurality of face elements 21a by a plurality of step portions 22 having step portion ridge lines 22r extending in a direction intersecting with an outline of the output wall 18. The plurality of face elements 21a, which are disposed at positions spaced apart from the first reflection surface 20 in the vehicle width direction along the outline, are separated by the step portions 22, the step portion ridge lines 22r of which are inclined at a certain angle with respect to the outline when viewed in the vehicle front-rear direction.

## Description

### Technical Field

The present invention relates to a vehicle lamp device.

### Related Art

As a vehicle lamp device such as a turn signal lamp or brake lamp, a device is known that guides light emitted from a light source such as an LED through a light guide member to an output surface as parallel light directed in a vehicle front-rear direction (for example, see Patent Document 1).

The vehicle lamp device described in Patent Document 1 includes a light source and a light guide member, and an output surface of the light guide member facing a vehicle front-rear direction is formed to substantially follow a contour portion of the lamp device. The light guide member includes an incident portion where light from the light source inputs, an output wall extending along the vehicle front-rear direction and has the tip end side in the extension direction as an output surface, and an intermediate light guide wall guiding light incident from the incident portion to the base end side of the output wall. In the incident area of the intermediate light guide wall, a first reflection surface is provided to internally reflect the light incident from the incident portion as a first parallel light towards the base end side of the output wall. Further, at the base end side of the output wall, a second reflection surface is provided to internally reflect the first parallel light guided by the intermediate light guide wall as a second parallel light towards the tip end side of the output wall. On the output surface of the light guide member, a diffuser with an uneven shape is provided to diffuse the light emitted to the outside in a plurality of directions.

Further, the output wall of the light guide member has a contour portion extending along the vehicle width direction above and below the first reflection surface, and the second reflection surface is divided into a plurality of face elements by a plurality of step portions. The step portion ridge lines of each step portion dividing the plurality of face elements extend in a direction intersecting with the contour line following the contour portion of the output wall. Each face element reflects a first reflected light emitted radially from the first reflection surface as the second parallel light towards the front side of the output wall. Here, when viewed in the vehicle front-rear direction, if the center of the first reflection surface is referred to as a radiation center, each step portion ridge line of the second reflection surface is inclined with one end side facing towards the radiation center.

This vehicle lamp device may emit light from the light source to the outside from the output surface as parallel light substantially following the contour portion through internal reflection by the first reflection surface and the second reflection surface of the light guide member. In the case of this vehicle lamp device, since parallel light along the vehicle front-rear direction is emitted from the output surface, it is visually recognized from the outside as a bright linear light substantially following the contour portion.

### Citation List

### Patent Document

Patent Document 1: Japanese Patent Application Laid-Open (JP-A) No. 2012-243734.

### SUMMARY

### Technical Problem

The vehicle lamp device described in Patent Document 1 diffuses the second parallel light passing through the output wall along the vehicle front-rear direction in a plurality of directions by the diffuser on the output surface. However, since the diffuser provided on the output surface consists of fine uneven shapes, there is a limit to expanding the direction of light emitted from the output surface towards the vehicle width direction outer side. Currently, in order to improve visibility from the outside when the lamp is turned on, it is desired to further expand the direction of emitted light emitted to the outside towards the vehicle width direction outer side.
The vehicle lamp device described in Patent Document 1 has the second reflection surface of the light guide member composed of a plurality of face elements, and the step portion ridge lines of the step portions dividing each face element are inclined to face towards the radiation center. This means that each step portion ridge line is inclined at different angles relative to the upper and lower contour line, and the inclination becomes larger (closer to horizontal) as it becomes more distant from the first reflection surface in the vehicle width direction. As a result, between the plurality of face elements located at positions distant from the first reflection surface in the vehicle width direction, dead spaces that are substantially triangular in shape when viewed in the vehicle front-rear direction are created where no face elements may be formed. Thus, in the case of the vehicle lamp device described in Patent Document 1, in the dead spaces where face elements do not exist, it is not possible to emit the first parallel light to the output surface on the front side of the output wall, resulting in areas on the output surface of the output wall where there is little emission of the second parallel light.

As one objective, the present invention aims to provide a vehicle lamp device that may further expand the direction of emitted light emitted to the outside towards the vehicle width direction outer side.
As another objective, the present invention aims to provide a vehicle lamp device that may efficiently emit light from the entire area of the output surface of the light guide member. Solution to Problem

To solve the above-mentioned issues, the vehicle lamp device according to the present invention adopts the following configuration.
In other words, the vehicle lamp device according to the present invention includes a light source; and a light guide member, configured to guide light incident from the light source to an output surface facing in a vehicle front-rear direction. The light guide member includes: an incident portion, into which light from the light source is incident; an output wall, having a contour portion extending substantially along a vehicle width direction at least in one of an upper side and a lower side of the incident portion, and having one end side facing a vehicle front-rear direction serving as the output surface; an intermediate light guide wall, configured to guide light incident into the incident portion to other end side of the output wall facing a vehicle front-rear direction; a first reflection surface, configured in an incident area of the intermediate light guide wall, which radially internally reflects light incident into the incident portion as a first parallel light towards other end side of the output wall; and a second reflection surface, configured at the other end side of the output wall, which internally reflects the first parallel light as a second parallel light towards one end side of the output wall. The second reflection surface is divided into a plurality of face elements by a plurality of step portions whose step portion ridge lines extend in a direction intersecting with a contour line following the contour portion. The plurality of face elements configured at positions distant from the first reflection surface in a vehicle width direction along the contour line are, when viewed in a vehicle front-rear direction, divided by the step portions whose step portion ridge lines are inclined at a constant angle with respect to the contour line.

In the above configuration, when light is emitted from the light source, it is incident into the incident portion of the light guide member. The light incident into the incident portion is guided as a first parallel light within the intermediate light guide wall to the other end side of the output wall by internal reflection from the first reflection surface. The first parallel light guided to the other end side of the output wall is guided as a second parallel light within the output wall to the one end side of the output wall by internal reflection from each face element of the second reflection surface, and is then emitted to the outside from the output surface. At this time, the plurality of face elements configured at positions distant from the first reflection surface in a vehicle width direction along the contour line are, when viewed in the vehicle front-rear direction, divided by step portions whose step portion ridge lines are inclined at a constant angle with respect to the contour line. Thus, the plurality of face elements in this area maintain a shape that reflects the first parallel light radially reflected from the first reflection surface towards the output surface as the second reflected light, while creating no dead spaces that do not contribute to the generation of the second reflected light between the face elements when viewed in the vehicle front-rear direction.

When using a center line in a vehicle width direction passing through a center of the first reflection surface as a reference, the face element positioned within a range where a central angle centered on a center of the first reflection surface does not exceed a predetermined angle may be shaped such that, when viewed in a vehicle front-rear direction, a width in a direction along the contour line gradually increases from a side of the first reflection surface towards a side where the contour line is located.

In the range where the central angle centered on the center of the first reflection surface does not exceed a predetermined angle, the number of step portions dividing the face elements may be reduced, thereby decreasing light guide loss at the step portions. Thus, in the case of adopting this configuration, light emitted from the light source may be efficiently guided to the output surface.

To solve the above-mentioned issues, the vehicle lamp device according to the present invention adopts the following configuration.
In other words, the vehicle lamp device according to the present invention includes a light source; and a light guide member, configured to guide light incident from the light source to an output surface facing in a vehicle front-rear direction. The light guide member includes: an incident portion, into which light from the light source is incident; an output wall, having a contour portion extending substantially along a vehicle width direction in a vehicle width direction outer area of the incident portion, and having one end side facing a vehicle front-rear direction serving as the output surface; an intermediate light guide wall, configured to guide light incident into the incident portion to other end side of the output wall facing a vehicle front-rear direction; a first reflection surface, configured in an incident area of the intermediate light guide wall, which radially internally reflects light incident into the incident portion as a first parallel light towards other end side of the output wall; and a second reflection surface, configured at the other end side of the output wall, which internally reflects the first parallel light as a second parallel light towards one end side of the output wall. The second reflection surface is divided into a plurality of face elements by a plurality of step portions whose step portion ridge lines extend in a direction intersecting with a contour line following the contour portion. A curved surface with a larger curvature radius than other step portion ridge lines in a vehicle width direction outer area is provided on the step portion ridge line in contact with the face element located in a position close to the first reflection surface.

In the above configuration, when light is emitted from the light source, it is incident into the incident portion of the light guide member. The light incident into the incident portion is guided as a first parallel light within the intermediate light guide wall to the other end side of the output wall by internal reflection from the first reflection surface. The first parallel light guided to the other end side of the output wall is mainly guided as the second parallel light within the output wall by internal reflection from each face element of the second reflection surface.
The guided second parallel light is emitted to the outside from the output surface. Further, in the vicinity of the face element among the plurality of face elements of the second reflection surface that are located in a position close to the first reflection surface, a part of the first parallel light guided to the other end side of the output wall is reflected by the curved surface of the step portion ridge line with a large curvature radius. This reflected light proceeds inside the output wall with an inclination in the vehicle width direction outer side, and is emitted to the outside from the output wall with a large inclination in the vehicle width direction outer side.
It should be noted that when the curvature radius of the curved surface of the step portion ridge line is large, the amount of light of the second parallel light reflected by the face element and directed towards the output surface decreases. However, in the case of the vehicle lamp device according to the present invention, the curved surface with a large curvature radius is provided on the step portion ridge line located in a position close to the first reflection surface, so the decrease in visibility due to the reduction in the amount of reflected light at the face element is minimal. In other words, the face elements of the second reflection surface located in a position close to the first reflection surface are originally parts where sufficient light is guided from the first reflection surface with little light guide loss, so even if some light is reflected towards the vehicle width direction outer side by the curved surface with a large curvature radius, the decrease in visibility due to the reduction in the amount of emitted light in the vehicle front-rear direction is minimal.

When using a center line in a vehicle width direction passing through a center of the first reflection surface as a reference, it is desirable that the step portion ridge line on which the curved surface with a larger curvature radius is provided is positioned within a range where a central angle centered on a center of the first reflection surface does not exceed 45°.

The step portion ridge line positioned in a range where the central angle exceeds 45° tends to have a larger inclination angle of the step portion ridge line itself with respect to the center line in the vehicle width direction when viewed in the vehicle front-rear direction. As a result, the reflection direction of the light on the curved surface is more likely to deviate significantly from the vehicle width direction outer side. In this configuration, since the curved surface with a large curvature radius is provided on the step portion ridge line within a range where the central angle does not exceed 45°, the first parallel light reflected by the first reflection surface may be efficiently guided towards the vehicle width direction outer side. Further, in the case where the curved surface with a large curvature radius is provided on the step portion ridge line within a range where the central angle does not exceed 45°, the decrease in visibility due to the reduction in the amount of light at the face element in contact with that step portion ridge line is also minimized.

The step portion ridge line on which the curved surface with a larger curvature radius is provided may be provided only on a vehicle width direction outer side with respect to a center line in a vehicle width direction passing through a center of the first reflection surface.

In this case, it is possible to suppress the decrease in the amount of emitted light at the face elements in the vehicle width direction inner area, and ensure sufficient light quantity in the vehicle width direction inner area. Thus, when this configuration is adopted, the visibility from the vehicle front-rear direction may be further enhanced.

It is desirable that the curved surface with a larger curvature radius internally reflects the first parallel light such that a final light emission direction from the light guide member is inclined 80° or more towards a vehicle width direction outer side with respect to a vehicle front-rear direction.

In this case, even a person viewing from a direction almost perpendicular to the vehicle may effectively recognize the illumination of the lamp (emission of light from the light source).

### Effects of Invention

The vehicle lamp device according to the present invention includes a plurality of face elements configured at positions distant from the first reflection surface in the vehicle width direction along the contour line, which are, when viewed in the vehicle front-rear direction, divided by step portions whose step portion ridge lines are inclined at a constant angle with respect to the contour line. Thus, the plurality of face elements in this area maintain a shape that reflects the first parallel light radially reflected from the first reflection surface towards the output surface as the second reflected light, while creating no dead spaces that do not contribute to the generation of the second reflected light between the face elements when viewed in the vehicle front-rear direction.
Thus, in the case where the vehicle lamp device according to the present invention is adopted, light may be efficiently emitted from the entire area of the output surface of the light guide member.

The vehicle lamp device according to the present invention includes a light guide member with a second reflection surface divided into a plurality of face elements by a plurality of step portions, and a curved surface with a larger curvature radius than other step portion ridge lines in the vehicle width direction outer area is provided on the step portion ridge line adjacent to the face elements located close to the first reflection surface. As a result, when the first parallel light is reflected by the curved surface with the large curvature radius on the step portion ridge line, the reflected light is emitted with a stronger orientation towards the vehicle width direction outer side. Thus, in the case where the vehicle lamp device according to the present invention is adopted, the direction of the emitted light to the outside may be further expanded towards the vehicle width direction outer side.
Furthermore, in the vehicle lamp device according to the present invention, a curved surface with a large curvature radius is provided on the step portion ridge line adjacent to the face elements in the area where the amount of light guided from the first reflection surface is originally large. As a result, it is possible to suppress the decrease in visibility caused by the reduction in the amount of light emitted from the face elements towards the front side of the output surface.

### BRIEF DESCRIPTION OF DRAWINGS

[FIG. 1] is the front view of the vehicle lamp device of the embodiment.
[FIG. 2] is the front view with a part of the vehicle lamp device of the embodiment broken away.
[FIG. 3] is a cross-sectional view taken along the line III-III in FIG. 1.
[FIG. 4] is a rear view of the light guide member of the embodiment.
[FIG. 5] is a side view of the light guide member of the embodiment.
[FIG. 6] is an enlarged view of a part of FIG. 4.
[FIG. 7] is a front view of the light guide member of the embodiment.
[FIG. 8] is a perspective view of the light guide member of the second embodiment as viewed from the rear side.
[FIG. 9] is a rear view of a part of the light guide member of the second embodiment.
[FIG. 10] is a side view of the light guide member of the second embodiment.
[FIG. 11] is a cross-sectional view taken along the line VII-VII in FIG. 6.
[FIG. 12] is an enlarged view of the VIII part of FIG. 7.
[FIG. 13] is the perspective view of the light guide member of the second embodiment as viewed from the front side.

### DESCRIPTION OF EMBODIMENTS

Hereinafter, the embodiments of the present invention are described with reference to the drawings. It is noted that, in appropriate places in the drawings, an arrow FR indicating the front side of the vehicle, an arrow UP indicating the upper side of the vehicle, and an arrow LH indicating the left side of the vehicle are marked.

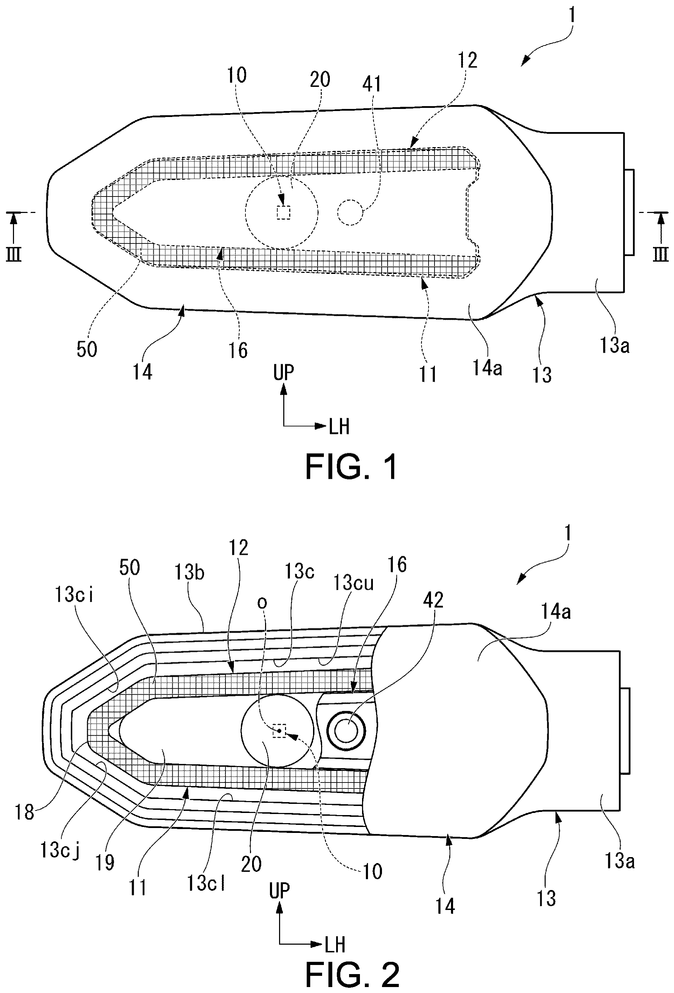

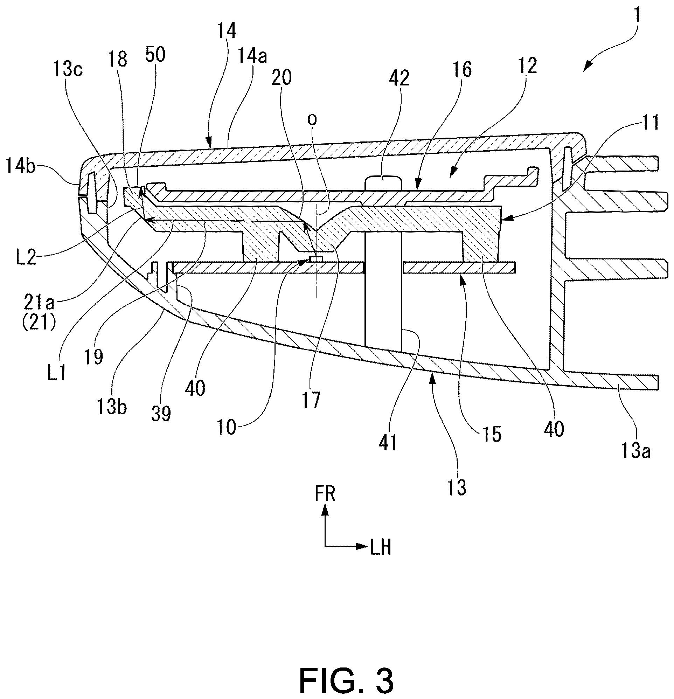

FIG. 1 is the front view of a turn signal lamp 1, which is a form of a vehicle lamp device, and FIG. 2 is the front view showing a part of the turn signal lamp 1 in a broken state. Further, FIG. 3 is a cross-sectional view taken along the line III-III in FIG. 1 of the turn signal lamp 1. The turn signal lamp 1 shown in the drawings is a turn signal lamp positioned on the front right side of a motorcycle. The turn signal lamp 1 includes a lamp body unit 12 that includes a light emitting element 10 such as an LED as a light source, and a light guide member 11 made of transparent resin material such as acrylic resin. The lamp body unit 12 is positioned inside a lamp housing 13.

The lamp housing 13 includes a base portion 13a that is attached to the vehicle body, and a unit housing portion 13b that extends to the vehicle width direction outer side from the base portion 13a. The unit housing portion 13b has an opening on the vehicle front side, and the lamp body unit 12 is housed within this opening 13c. The opening 13c of the unit housing portion 13b is formed as a substantially polygonal shape elongated in the vehicle width direction (substantially a pentagonal shape formed by combining a triangular shape to the end portion on the vehicle width direction outer side of a rectangular shape elongated in the vehicle width direction) when viewed from the front. The front side of the opening 13c of the lamp housing 13 is closed by an outer lens 14 attached to the front portion of the unit housing portion 13b.

As shown in FIG. 3, the outer lens 14 includes a substantially flat lens main wall 14a positioned on the front side of the opening 13c, and a peripheral wall 14b protruding towards the rear side from the peripheral edge portion of the lens main wall 14a. The outer lens 14 is fixed to the lamp housing 13 with the end surface of the peripheral wall 14b abutting against the peripheral edge portion of the opening 13c of the lamp housing 13, and in this state, it is secured by means of uneven engagement or screws, etc. The outer lens 14 is formed of a transparent resin material that allows light transmission.

The lamp body unit 12 includes the aforementioned light emitting element 10, a substrate 15 on which the light emitting element 10 is mounted on the front surface, the aforementioned light guide member 11, and a shielding cover 16 that shields the area in the center of the front side of the light guide member 11 where no light guiding is required.

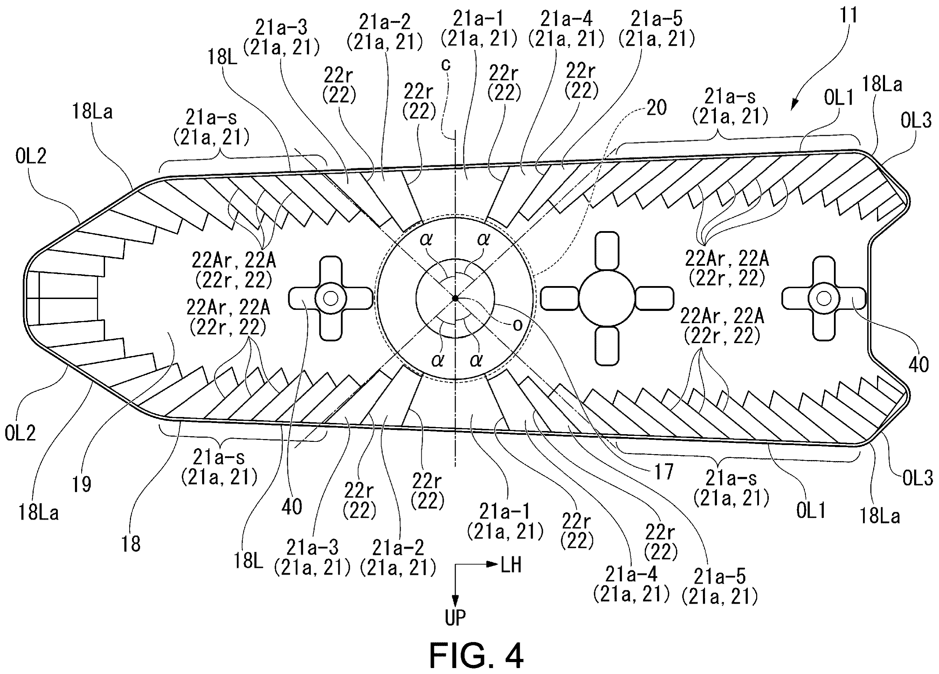

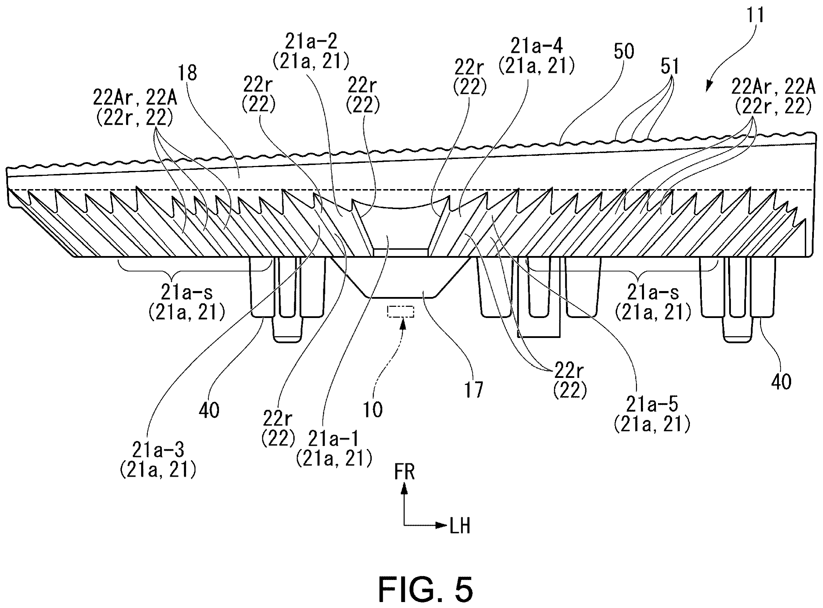

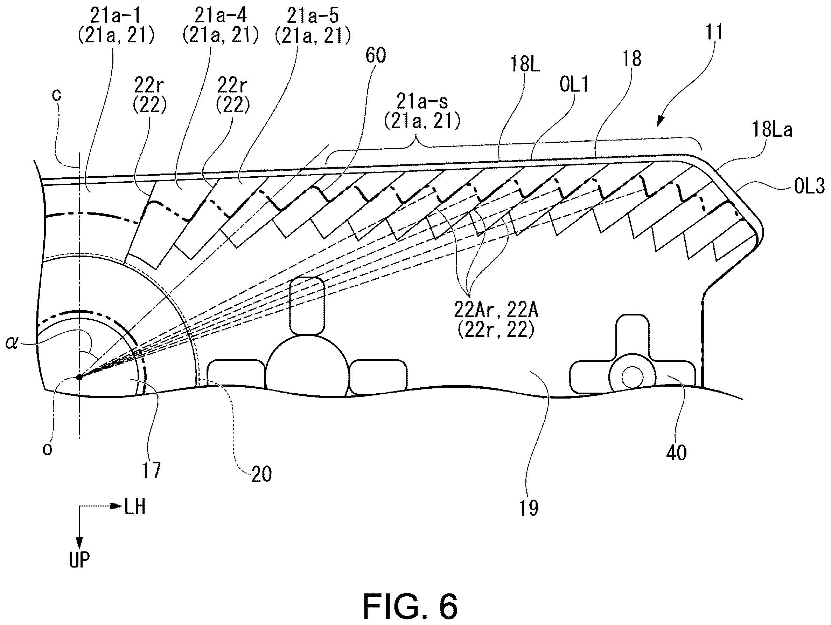

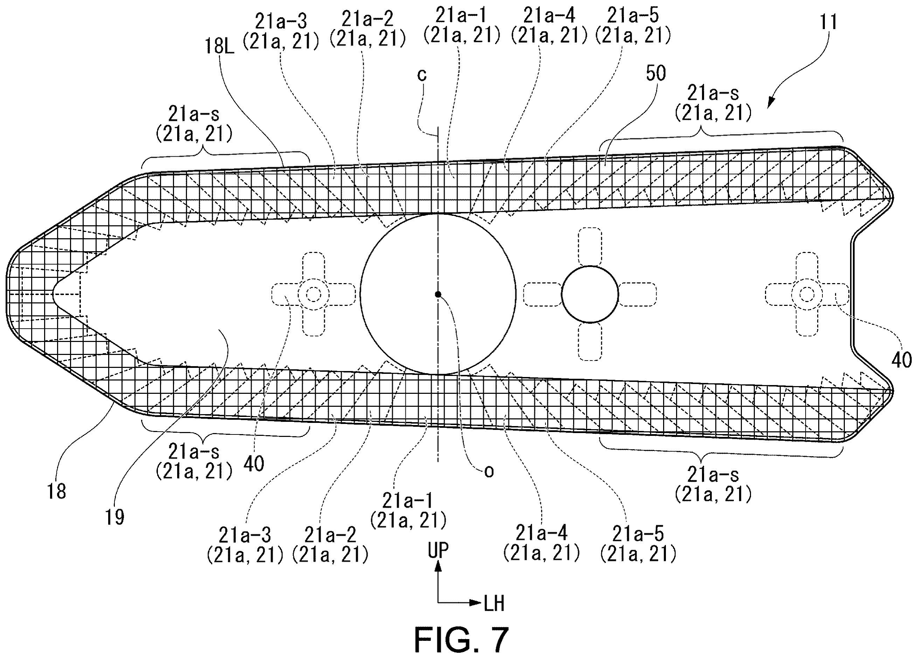

FIG. 4 is a rear view of the light guide member 11, and FIG. 5 is a side view of the light guide member 11. Further, FIG. 6 is an enlarged view of a part of FIG. 4, and FIG. 7 is a front view of the light guide member 11.
The light guide member 11 includes an incident portion 17 where light from the light emitting element 10 enters, an output wall 18 positioned substantially along a part of the opening 13c of the unit housing portion 13b (upper side 13cu, inclined sides 13ci, 13cj, and lower side 13cl), and an intermediate light guide wall 19 that guides light incident into the incident portion 17 to the base portion side (other end side) of the output wall 18. The front end surface of the output wall 18 facing the vehicle front side is designated as an output surface 50 that emits light incident from the light emitting element 10 into the incident portion 17 towards the vehicle front side. On the output surface 50, a diffuser 51 with a fine uneven shape is provided to diffuse the light to be emitted towards the vehicle front side in a plurality of directions.

The intermediate light guide wall 19 is formed in a front view shape that is slightly smaller than and similar to the opening 13c of the unit housing portion 13b. The intermediate light guide wall 19 is a light guide wall that stands upright with the front face directly facing the vehicle front side. The incident portion 17 is positioned in the central area of the rear view of the intermediate light guide wall 19. The incident portion 17 protrudes in a truncated cone shape from the rear surface of the intermediate light guide wall 19 towards the vehicle rear side.

Further, as shown in FIG. 3, an abutting seat 40 that abuts the front surface of the substrate 15 is protrudingly provided on the rear surface of the intermediate light guide wall 19. The substrate 15 is supported by a support rib 39 protruding inside the unit housing portion 13b of the lamp housing 13, and in this state, the abutting seat 40 of the intermediate light guide wall 19 abuts the front surface of the substrate 15. Further, a boss portion 41 that penetrates the substrate 15 and the intermediate light guide wall 19 is protrudingly provided inside the unit housing portion 13b of the lamp housing 13. A screw hole (not shown) is formed on the end surface of the boss portion 41. The shaft portion of a screw 42 that penetrates the shielding cover 16 from the front side is threaded into this screw hole. When the shielding cover 16 is fastened to the boss portion 41 by the screw 42, the intermediate light guide wall 19 is pressed against the substrate 15, and the light guide member 11 is thereby fixed to the lamp housing 13.

The output wall 18 stands upright towards the vehicle front side from the peripheral edge portion of the intermediate light guide wall 19. The upright direction of the output wall 18 is substantially perpendicular to the extending direction of the intermediate light guide wall 19. In this embodiment, the output wall 18 stands upright towards the vehicle front side from the edges of the peripheral edge portion of the intermediate light guide wall 19, excluding the edge on the vehicle width direction inner side. The output wall 18 has a curved or bent contour shape to surround at least the vehicle width direction outer area of the incident portion 17. As shown in FIG. 4, the output wall 18 has contour portions OL1 that extend linearly substantially along the vehicle width direction in the upper side and the lower side of the incident portion 17, and contour portions OL2 and OL3 that curve in each end portion area on the vehicle width direction outer side and inner side and extend to the lower side or the upper side.

Further, as shown in FIG. 3, the tip end side area of the output wall 18, which stands upright towards the vehicle front side from the peripheral edge portion of the intermediate light guide wall 19, protrudes further towards the vehicle front side than the front end surface of the unit housing portion 13b of the lamp housing 13. In other words, a part of the outer side surface of the output wall 18 faces the inner surface of the peripheral wall 14b of the outer lens 14, which is positioned further towards the vehicle front side than the unit housing portion 13b.

In the incident area (the area on the front side of the incident portion 17) of the intermediate light guide wall 19, a first reflection surface 20 is provided that internally reflects the light incident on the incident portion 17 as a first parallel light L1 towards the base portion side of the output wall 18. The first reflection surface 20 is composed of a rotational curved surface that is substantially conically recessed towards the vehicle rear side with respect to the front surface of the intermediate light guide wall 19. The rotational curved surface constituting the first reflection surface 20 is a rotational curved surface centered on an axis line o passing through the centers (or near the centers) of the incident portion 17 and the light emitting element 10. The light incident from the light emitting element 10 to the incident portion 17 is internally reflected (totally reflected) radially by the substantially conical first reflection surface 20, and proceeds as the first parallel light L1 towards the base end side of the output wall 18 inside the intermediate light guide wall 19.
The axis line o passing through the centers (or near the centers) of the incident portion 17 and the light emitting element 10 coincides with a radiation center that radially reflects the incident light from the incident portion 17 when the first reflection surface 20 is viewed from the vehicle front side. Hereinafter, the center when viewing the first reflection surface 20 from the vehicle front side may be referred to as the "radiation center o".

In the incident area at the base end side of the output wall 18 (the outer end area of the intermediate light guide wall 19), a second reflection surface 21 is provided that internally reflects the first parallel light L1 reaching that incident area as a second parallel light L2 towards the tip end side of the output wall 18 (towards the vehicle front side). The second reflection surface 21 reflects the light (first parallel light L1) that has been internally reflected uniformly in the radiation direction from the substantially conical first reflection surface 20 as the second parallel light L2 towards the vehicle front side at the outer periphery side of the intermediate light guide wall 19. For this reason, the second reflection surface 21 is not composed of a single continuous surface, but is divided into a plurality of face elements 21a along the direction following the outer peripheral edge portion of the intermediate light guide wall 19.

Specifically, as shown in FIG. 4, when viewing the light guide member 11 from the rear, the line following the upper and lower contour portions OL1 of the output wall 18 is referred to as the contour line 18L, the lines following the contour portions OL2 and OL3 on the vehicle width direction outer side and inner side of the contour portion OL1 are referred to as the contour lines 18La, and the second reflection surface 21 is divided into a plurality of face elements 21a by a plurality of step portions 22 whose step portion ridge lines 22r extend in a direction intersecting the contour lines 18L and 18La. Each face element 21a divided by the step portions 22 reflects the first parallel light L1 (refer to FIG. 3) that has radially proceeded from the first reflection surface 20 as the second parallel light L2 (refer to FIG. 3) towards the area on the output surface 50 positioned in front of each face element 21a.

The plurality of face elements 21a of the second reflection surface 21 configured at the base end side of the output wall 18 are, as shown in FIG. 4 to FIG. 7, arranged along the contour lines 18L and 18La of the output wall 18. The face elements 21a-1 positioned directly above and directly below the radiation center o of the first reflection surface 20 are formed in an isosceles trapezoidal shape that narrows in width towards the radiation center o of the first reflection surface 20. The face elements 21a-2 adjacently positioned on the vehicle width direction outer side of these face elements 21a-1 are formed in a trapezoidal shape that is entirely inclined distortedly towards the vehicle width direction outer side. Furthermore, the face elements 21a-3 adjacently positioned on the vehicle width direction outer side of these face elements 21a-2 are formed in a trapezoidal shape that is entirely inclined even more distortedly towards the vehicle width direction outer side. The width of the parts of the face elements 21a-1, 21a-2, and 21a-3 that contact the contour line 18L gradually narrows in this order. The other face elements 21a positioned further towards the vehicle width direction outer side than the face elements 21a-3 are formed in a substantially rectangular shape with a width in the direction along the contour line 18L that is narrower than that of the face elements 21a-1 to 21a-3.

Further, the face elements 21a-4 adjacently positioned on the vehicle width direction inner side of the face elements 21a-1 located directly above and below the radiation center o of the first reflection surface 20 are formed in a trapezoidal shape that is entirely inclined distortedly towards the vehicle width direction inner side. Furthermore, the face elements 21a-5 adjacently positioned on the vehicle width direction inner side of these face elements 21a-4 are formed in a trapezoidal shape that is entirely inclined even more distortedly towards the vehicle width direction inner side. The width of the parts of the face elements 21a-1, 21a-4, and 21a-5 that contact the contour line 18L gradually narrows in this order. The other face elements 21a positioned further towards the vehicle width direction inner side than the face elements 21a-5 are formed in a substantially rectangular shape with a width in the direction along the contour line 18L that is narrower than that of the face elements 21a-4 and 21a-5.

In the direction along the contour line 18L, the face elements 21a-1 to 21a-5 of the output wall 18 positioned in close proximity to the first reflection surface 20 are divided by the step portions 22 whose step portion ridge lines 22r extend facing the radiation center o direction. In other words, the step portion ridge lines 22r of each step portion 22 in this area do not have a constant angle of inclination with respect to the contour line 18L of the output wall 18 that extends substantially along the vehicle width direction, but rather the angle of inclination changes for each position.

Further, in this area, the face elements 21a-1 to 21a-5, when viewed in the vehicle front-rear direction, are formed in an substantially trapezoidal shape with their width gradually increasing in the direction along the contour line 18L from the side of the first reflection surface 20 (the side of the radiation center o) towards the side where the contour line 18L is located. As shown in FIG. 4 and FIG. 6, these face elements 21a formed in an substantially trapezoidal shape are positioned within a range where the central angle centered on the radiation center o does not exceed a predetermined angle α, with reference to the center line c in the vehicle width direction passing through the radiation center o (center) of the first reflection surface 20. The predetermined angle α is preferably, for example, 45°.

In contrast, in the direction along the contour line 18L, the plurality of face elements 21a of the output wall 18 located at positions distant from the first reflection surface 20 (for example, positions where the central angle centered on the radiation center o exceeds the predetermined angle α) have adjacent step portion ridge lines 22r that do not face the radiation center o direction. All face elements 21a in this area, when viewed in the vehicle front-rear direction, are divided by the step portions 22 with the step portion ridge lines 22r inclined at a constant angle with respect to the contour line 18L.

As shown in FIG. 6, the inclination angle of the step portion ridge lines 22r in this area (the inclination angle with respect to a vertical line perpendicular to the contour line 18L) is greater than the inclination angle of radial lines directed from each position on the contour line 18L in this area towards the radiation center o. In other words, the step portion ridge lines 22r in this area maintain a constant inclination angle without changing (gradually decreasing) even as their intersection points with the contour line 18L are displaced in a direction away from the first reflection surface 20. As a result, in the vehicle front-rear direction view of the light guide member 11, no dead space that does not contribute to the generation of the second parallel light L2 is created between adjacent face elements 21a. However, each face element 21a in this area is formed in a curved surface shape capable of reflecting light radially guided from the first reflection surface 20 as the second parallel light L2 towards the vehicle front side.
It should be noted that in FIG. 4 and FIG. 6, the step portions 22 and the step portion ridge lines 22r in this area are designated with reference numerals 22A and 22Ar, respectively, to distinguish them from the step portions 22 and the step portion ridge lines 22r in other areas.

In FIG. 6, the dotted line 60 indicates the uneven change of the cross-sectional surface when the plurality of face elements 21a and step portions 22 are cut in a direction perpendicular to the axis line o. As shown by this dotted line 60, in the direction along the contour line 18L, the plurality of face elements 21a-s of the output wall 18 located at positions distant from the first reflection surface 20 and their adjacent step portions 22A have a bending angle between the face elements 21a-s and the step portions 22A that gradually narrows towards the vehicle width direction outer side.

Further, among the plurality of face elements 21a configured in the contour portions OL2, OL3 on the vehicle width direction outer side and inner side of the output wall 18, some are divided by the step portions 22 with the step portion ridge lines 22r inclined at a constant angle with respect to the contour line 18L when viewed in the vehicle front-rear direction, while the remaining ones are divided by the step portions 22 with the step portion ridge lines 22r extending towards the radiation center o direction when viewed in the vehicle front-rear direction. In this area, where no dead space that does not contribute to the generation of the second parallel light L2 occurs between adjacent face elements 21a when viewed in the vehicle front-rear direction, the step portion ridge lines 22r of the step portions 22 are oriented towards the radiation center o direction.

The turn signal lamp 1 with the above-described configuration may emit light from the light emitting element 10 to the outside of the vehicle as follows.

When light is emitted from the light emitting element 10 on the substrate 15, the light is incident into the incident portion 17 of the light guide member 11. As shown in FIG. 3, the light incident into the incident portion 17 is guided radially towards the base end side of the output wall 18 as the first parallel light L1 within the intermediate light guide wall 19 by internal reflection (total reflection) from the first reflection surface 20 of the light guide member 11. At this time, the first parallel light L1 is guided to the base end side of the entire area of the output wall 18, which extends substantially along the outer edge of the intermediate light guide wall 19.

The first parallel light L1 proceeds in the radiation direction centered on the radiation center o and is internally reflected by each face elements 21a of the second reflection surface 21 on the base end side of the output wall 18. The light internally reflected by each face element 21a is guided as the second parallel light L2 towards the output surface 50 at the tip end side of the output wall 18. The light guided to the output surface 50 is diffused in a plurality of directions by the diffuser 51 and emitted towards the vehicle front side. The light thus emitted becomes visible from the vehicle front side through the outer lens 14.

Further, the plurality of face elements 21a of the second reflection surface 21, which are positioned at a distance from the first reflection surface 20 along the contour line 18L, do not have dead spaces between the face elements 21a that do not contribute to the generation of the second parallel light L2, as mentioned above. As a result, the light guided to the base end side of the output wall 18 by the intermediate light guide wall 19 is evenly guided as the second parallel light L2 from the plurality of face elements 21a towards the output surface 50 throughout the entire area along the contour line 18L of the output wall 18. As a result, light with an almost uniform luminous flux is emitted from the entire area of the output surface 50.

### <Effect of Embodiment>

In the turn signal lamp 1 of the present embodiment, the plurality of face elements 21a of the second reflection surface 21, which are positioned at a distance from the first reflection surface 20 along the contour line 18L, are divided by the step portion 22 whose step portion ridge line 22r is inclined at a constant angle to the contour line 18L when viewed in the vehicle front-rear direction. Thus, the plurality of face elements 21a in this area maintain a shape that reflects the first parallel light L1, which is radially reflected from the first reflection surface 20, towards the output surface 50 as the second parallel light L2, while creating no dead spaces that do not contribute to the generation of the second parallel light L2 between the face elements 21a when viewed in the vehicle front-rear direction.

Thus, in the case of adopting the turn signal lamp 1 of the present embodiment, light may be efficiently emitted from the entire area of the output surface 50 of the light guide member 11.

Further, in the turn signal lamp 1 of the present embodiment, the face elements 21a (21a-1 to 21a-5) positioned within a range where the central angle centered on the radiation center o of the first reflection surface 20 does not exceed a predetermined angle α are shaped to gradually increase in width along the direction of the contour line 18L from the side of the first reflection surface 20 towards the side where the contour line 18L is positioned when viewed in the vehicle front-rear direction. As a result, in the range where the central angle centered on the radiation center o of the first reflection surface does not exceed the predetermined angle α, the number of step portions 22 dividing the face elements 21a may be reduced, thereby decreasing light guide losses at the step portions 22.
Thus, in the case of adopting the turn signal lamp 1 of the present embodiment, light emitted from the light emitting element 10 may be efficiently guided to the output surface 50.

In particular, as in the example of the present embodiment, when the aforementioned predetermined angle α is set to 45°, the inclination angle (inclination angle with respect to the vertical line) of the step portion ridge line 22Ar with a constant angle positioned in the range exceeding the predetermined angle α may be made sufficiently small. As a result, in the case of adopting this configuration, dead spaces that do not contribute to the generation of the second parallel light L2 are less likely to occur on the output wall 18.

As described above, the turn signal lamp 1 (vehicle lamp device) of the present embodiment may enhance the visibility of the emitted light that is output to the outside and stabilize the quality of the turn signal lamp 1 (vehicle lamp device), making it possible to contribute to Goal 7 of the United Nations' Sustainable Development Goals (SDGs): "Promote sustained, inclusive and sustainable economic growth, full and productive employment and decent work for all".

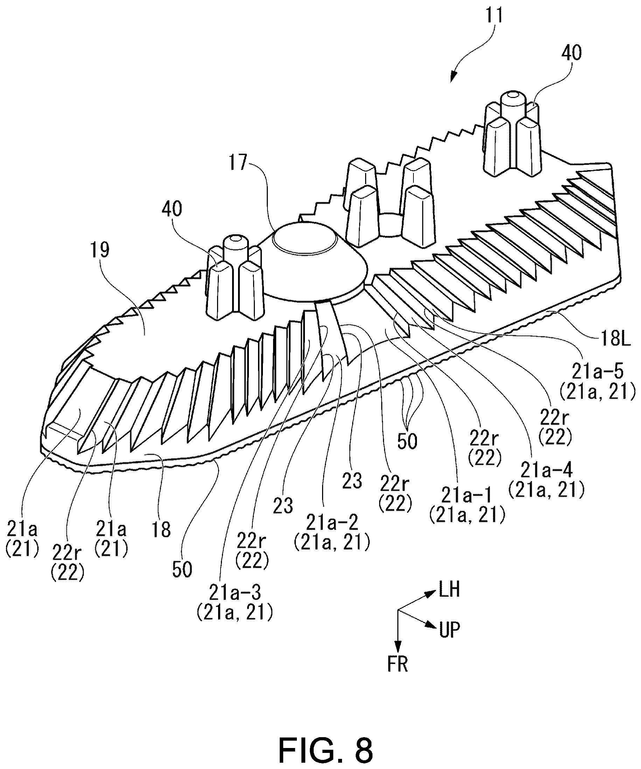

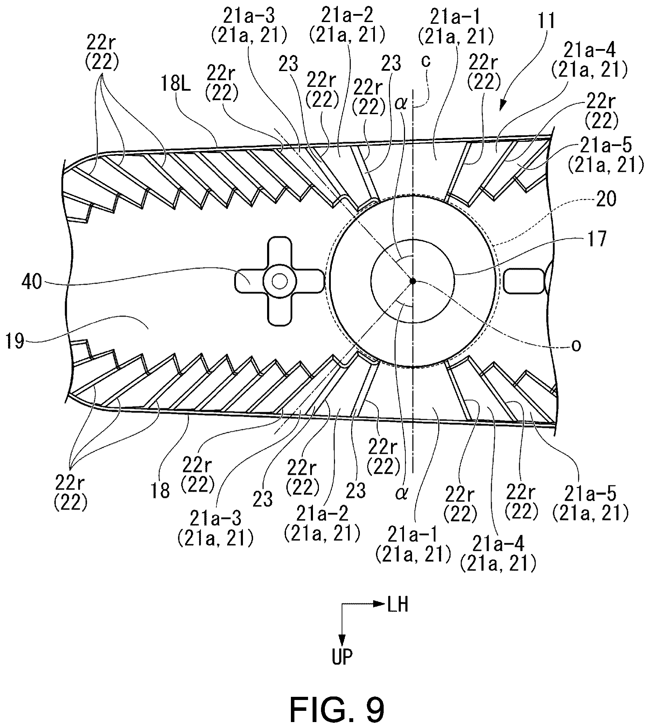

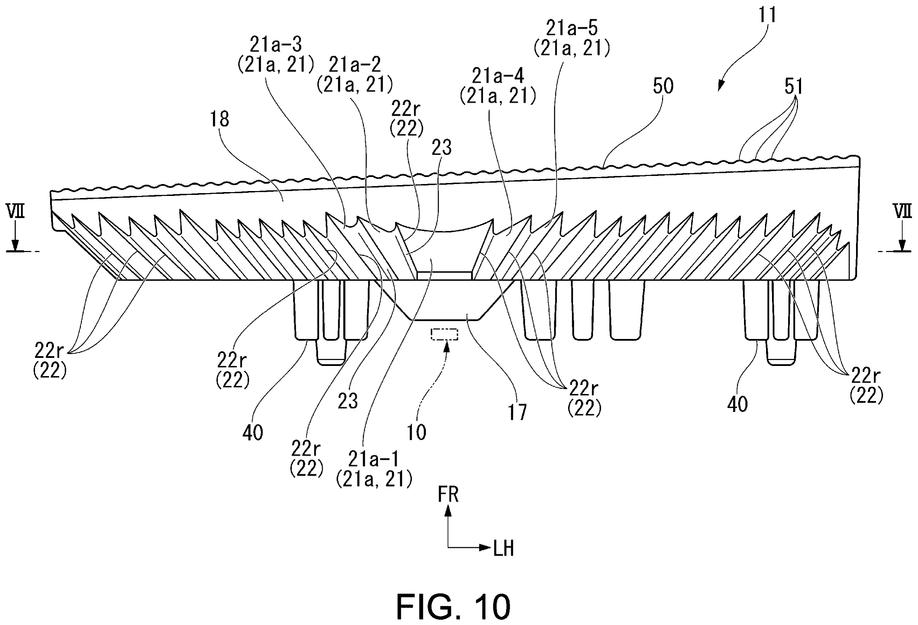

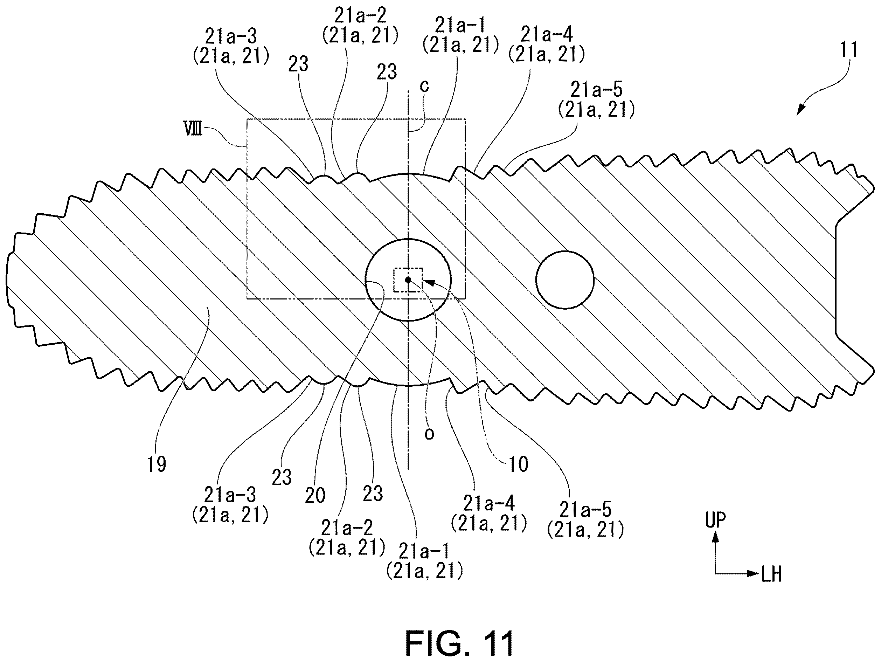

FIG. 8 is a perspective view of the light guide member 11 of the second embodiment as viewed from the rear side, and FIG. 9 is a rear view of a part the light guide member 11 of the second embodiment. Further, FIG. 10 is a side view of the light guide member 11 of the second embodiment, and FIG. 11 is a cross-sectional view taken along the line VII-VII in FIG. 10.
The light guide member 11 includes an incident portion 17 where light from the light emitting element 10 enters, an output wall 18 positioned substantially along a part of the opening 13c of the unit housing portion 13b (upper side 13cu, inclined sides 13ci, 13cj, and lower side 13cl), and an intermediate light guide wall 19 that guides light incident into the incident portion 17 to the base portion side (other end side) of the output wall 18. The front end surface of the output wall 18 facing the vehicle front side is designated as an output surface 50 that emits light incident from the light emitting element 10 into the incident portion 17 towards the vehicle front side. On the output surface 50, a diffuser 51 with a fine uneven shape is provided to diffuse the light to be emitted towards the vehicle front side in a plurality of directions.

The intermediate light guide wall 19 is formed in a front view shape that is slightly smaller than and similar to the opening 13c of the unit housing portion 13b. The intermediate light guide wall 19 is a light guide wall that stands upright with the front face directly facing the vehicle front side. The incident portion 17 is positioned in the central area of the rear view of the intermediate light guide wall 19. The incident portion 17 protrudes in a truncated cone shape from the rear surface of the intermediate light guide wall 19 towards the vehicle rear side.

Specifically, as shown in FIG. 9, when viewing the light guide member 11 from the rear side, if the line following the contour of the output wall 18 is referred to as the contour line 18L, the second reflection surface 21 is divided into a plurality of face elements 21a by a plurality of step portions 22 whose step portion ridge lines 22r extend in a direction intersecting the contour line 18L. The step portions 22 and their step portion ridge lines 22r that divide the second reflection surface 21 into each face element 21a extend substantially radially with the axis line o, which is the center of the first reflection surface 20, as the center. Each face element 21a divided by the step portions 22 emits the first parallel light L1 (refer to FIG. 3) that has radially proceeded from the first reflection surface 20 as the second parallel light L2 (refer to FIG. 3) towards the area on the output surface 50 positioned in front of each face element 21a.

The plurality of face elements 21a of the second reflection surface 21 positioned at the base end side of the output wall 18 are, as shown in FIG. 8 and FIG. 9, arranged along the contour line 18L of the output wall 18 which extends elongated in the vehicle width direction. The face elements 21a-1 positioned directly above and directly below the center (axis line o) of the first reflection surface 20 are formed in an isosceles trapezoidal shape that narrows in width towards the center of the first reflection surface 20. The face elements 21a-2 adjacently positioned on the vehicle width direction outer side of these face elements 21a-1 are formed in a trapezoidal shape that is entirely inclined distortedly towards the vehicle width direction outer side. Furthermore, the face elements 21a-3 adjacently positioned on the vehicle width direction outer side of these face elements 21a-2 are formed in a trapezoidal shape that is entirely inclined even more distortedly towards the vehicle width direction outer side. The width of the parts of the face elements 21a-1, 21a-2, and 21a-3 that contact the contour line 18L gradually narrows in this order. The other face elements 21a positioned further towards the vehicle width direction outer side than the face elements 21a-3 are formed in a substantially rectangular shape with a width in the direction along the contour line 18L that is narrower than that of the face elements 21a-1 to 21a-3.

Among the plurality of face elements 21a of the second reflection surface 21, curved surfaces 23 with a larger curvature radius than other step portion ridge lines 22r further towards the vehicle width direction outer side are provided on the step portion ridge lines 22r between the face elements 21a-1 and 21a-2 positioned above and below the first reflection surface 20, and on the step portion ridge lines 22r between the face elements 21a-2 and 21a-3. In the case of this embodiment, the step portion ridge lines 22r on which curved surfaces 23 with a larger curvature radius are provided are only provided on the vehicle width direction outer side of the center line c (refer to FIG. 9) in the vehicle width direction passing through the center (axis line) of the first reflection surface 20.
It is noted that, in this embodiment, although curved surfaces 23 with a larger curvature radius are provided on each step portion ridge line 22r between the face elements 21a-1 and 21a-2, and between the face elements 21a-2 and 21a-3, the curved surfaces 23 with a larger curvature radius may be provided on any step portion ridge line 22r that divides the face elements 21a positioned close to the first reflection surface 20. In this case, when using the center line c in the vehicle width direction passing through the center (axis line o) of the first reflection surface 20 as a reference, it is desirable to provide the curved surfaces 23 with a larger curvature radius on the step portion ridge lines 22r within a range where the central angle centered on the center (axis line o) of the first reflection surface 20 does not exceed 45°. Also, in the case of this embodiment, the curved surfaces 23 with a larger curvature radius are provided on two locations of the step portion ridge lines 22r within this range.

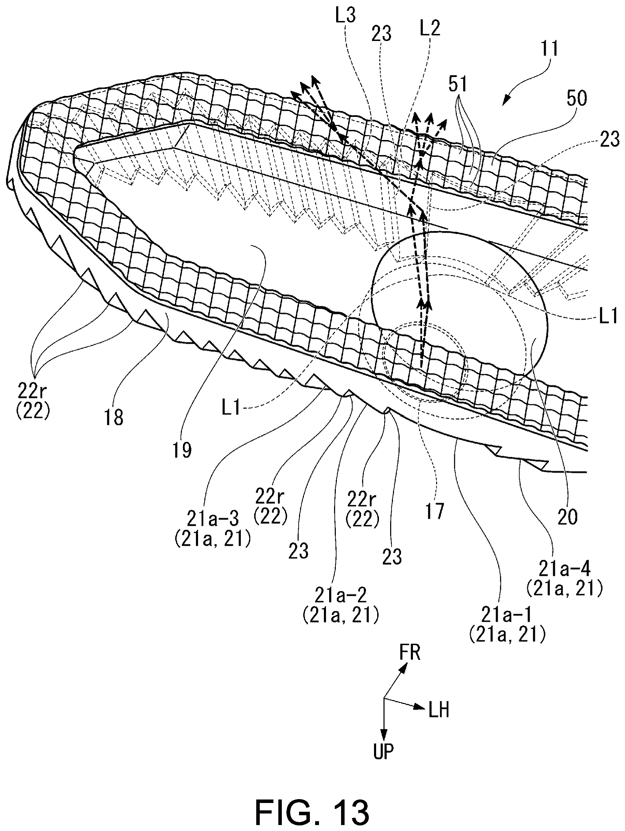

The turn signal lamp 1 with the above-described configuration may emit light from the light emitting element 10 to the outside of the vehicle as follows. FIG. 13 is a perspective view of the light guide member 11 as viewed from the front side. The following description primarily refers to FIG. 3, FIG. 9, and FIG. 13. When light is emitted from the light emitting element 10 on the substrate 15, the light is incident into the incident portion 17 of the light guide member 11. The light incident into the incident portion 17 is guided as the first parallel light L1 radially towards the base end side of the output wall 18 within the intermediate light guide wall 19 by internal reflection (total reflection) from the first reflection surface 20 of the light guide member 11. At this time, the first parallel light L1 is guided to the base end side of the entire area of the output wall 18, which extends substantially along the outer edge of the intermediate light guide wall 19. The light guided to the base end side of the output wall 18 is guided as the second parallel light L2 towards the tip end side within the output wall 18 by internal reflection (total reflection) from each face element 21a of the second reflection surface 21 extending along the contour line 18L. The light guided to the output surface 50 is diffused in a plurality of directions by the diffuser 51 and emitted towards the vehicle front side. The light thus emitted becomes visible from the vehicle front side through the outer lens 14.

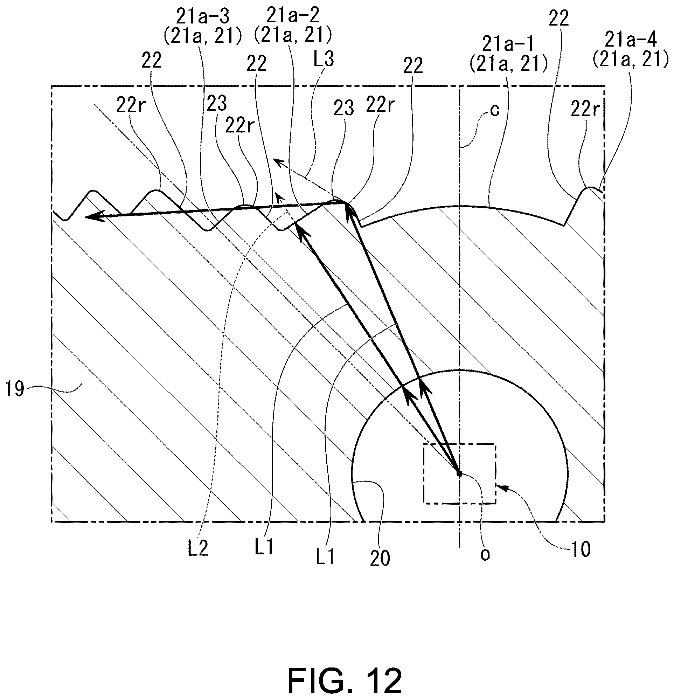

Further, a part of the first parallel light L1 guided to the upper side and the lower side from the first reflection surface 20 of the light guide member 11 is also reflected at the parts where the curved surfaces 23 with a larger curvature radius are provided on the step portion ridge lines 22r at the base end of the output wall 18. As shown in FIG. 12, the first parallel light L1 reflected by the curved surfaces 23 with a larger curvature radius proceeds diagonally forward towards the vehicle width direction outer side as a bent reflected light L3 bent towards the vehicle width direction outer side. The light that has proceeded diagonally forward towards the vehicle width direction outer side is emitted with a more outward orientation in the vehicle width direction after passing through the diffuser 51 of the output surface 50. The light thus emitted becomes visible from the front side and side of the vehicle through the outer lens 14.
In FIG. 12, although arrows indicating the behavior of the bent reflected light L3 are shown only for one of the two curved surfaces 23 with a larger curvature radius on the upper side, the first parallel light L1 is similarly bent and reflected towards the vehicle width direction outer side at the other curved surfaces 23 as well.

It is noted that, in the turn signal lamp 1 of the present embodiment, the curved surfaces 23 with a larger curvature radius on the step portion ridge lines 22r internally reflect the first parallel light L1 such that the final light emission direction from the light guide member 11 is inclined 80° or more towards the vehicle width direction outer side with respect to the vehicle front-rear direction.

### <Effects of the second embodiment>

In the turn signal lamp 1 of the present embodiment, the second reflection surface 21 of the light guide member 11 is divided into a plurality of face elements 21a by a plurality of step portions 22, and curved surfaces 23 with a larger curvature radius than other step portion ridge lines 22r in the vehicle width direction outer area are provided on the step portion ridge lines 22r adjacent to the face elements 21a located close to the first reflection surface 20. As a result, when the first parallel light L1 is reflected by the curved surfaces 23 of the step portion ridge lines 22r located close to the first reflection surface 20, the reflected light is emitted with a more outward orientation in the vehicle width direction.

Thus, in the case of adopting the turn signal lamp 1 of the present embodiment, it is possible to further expand the direction of the emitted light emitted to the outside towards the vehicle width direction outer side.

Further, in the turn signal lamp 1 of the present embodiment, since the curved surfaces 23 are provided on the step portion ridge lines 22r adjacent to the face elements 21a that are close to the first reflection surface 20 and originally receive a large amount of light guided from the first reflection surface 20, it is possible to suppress the decrease in visibility caused by the reduction in the amount of light emitted from the face elements 21a towards the front side of the output surface 50.

Further, in the turn signal lamp 1 of the present embodiment, when using the center line c in the vehicle width direction passing through the center (axis line o) of the first reflection surface 20 as a reference, curved surfaces 23 with a larger curvature radius are provided on the step portion ridge lines 22r within a range where the central angle centered on the center (axis line o) of the first reflection surface 20 does not exceed 45°. As a result, the light reflected by the curved surfaces 23 proceeds in a direction closer to the vehicle width direction. Thus, in the case of adopting this configuration, it is possible to efficiently guide the first parallel light L1 reflected by the first reflection surface 20 towards the vehicle width direction outer side. Further, as in the present embodiment, when the curved surfaces 23 with a larger curvature radius are provided on the step portion ridge lines 22r within a range where the central angle does not exceed 45°, the decrease in visibility due to the reduction in the amount of light on the face elements 21a adjacent to those step portion ridge lines 22r is also minimized.

Further, in the turn signal lamp 1 of the present embodiment, the step portion ridge lines 22r with the curved surfaces 23 having a larger curvature radius are provided only on the vehicle width direction outer side of the center line c in the vehicle width direction passing through the center of the first reflection surface 20. As a result, it is possible to suppress the decrease in the amount of emitted light in the vehicle width direction inner side area and ensure sufficient amount of light in the vehicle width direction inner side area. Thus, in the case of adopting the turn signal lamp 1 of the present embodiment, it is possible to further enhance visibility from the vehicle front side.

Furthermore, in the turn signal lamp 1 of the present embodiment, the curved surfaces 23 internally reflect the first parallel light L1 such that the final light emission direction from the light guide member 11 is inclined at an angle of 80° or more towards the vehicle width direction outer side with respect to the vehicle front-rear direction. As a result, in the case of adopting this configuration, it is possible for a person viewing from a direction almost perpendicular to the vehicle to clearly recognize the illumination of the lamp (emission of light from the light emitting element 10).

As described above, the turn signal lamp 1 (vehicle lamp device) of the present embodiment may expand the visible range of the emitted light that is output to the outside and stabilize the quality of the turn signal lamp 1 (vehicle lamp device), making it possible to contribute to Goal 7 of the United Nations' Sustainable Development Goals (SDGs): "Promote sustained, inclusive and sustainable economic growth, full and productive employment and decent work for all".

It should be noted that the present invention is not limited to the above-mentioned embodiment, and various design changes are possible within the scope of the present invention. For example, in the above-described embodiment, a turn signal lamp 1 positioned on the front right side of a motorcycle is illustrated as the vehicle lamp device, but the vehicle lamp device is not limited thereto. The vehicle lamp device may be a turn signal lamp positioned on the front left side of the vehicle or a turn signal lamp positioned at the rear of the vehicle. Further, the vehicle lamp device is not limited to turn signal lamps, but may be in other forms such as brake lamps or clearance lamps, as long as it is a lamp device that projects light to the front side or rear side of the vehicle.

Further, the vehicle to which the vehicle lamp device is applied is not limited to motorcycles, but may be other types of vehicles such as three-wheeled vehicles or four-wheeled vehicles. Further, the vehicle lamp device may be mounted on vehicles that do not have a power source such as an engine or motor.

Further, the light source of the vehicle-mounted device is not limited to LEDs, and may be in a form other than LEDs as long as it may incident light into the incident portion of the light guide member. Furthermore, the number of light sources is not limited to one, and two or more light sources may be provided.

Furthermore, in the above-described embodiment, the output wall 18 of the light guide member 11 is shaped to have upper and lower contour portions OL1 extending substantially along the vehicle width direction, and contour portions OL2 and OL3 that are inclinedly connected to the end portions of the contour portion OL1 in the vehicle width direction outer side and inner side. However, the contour shape of the output wall 18 of the light guide member 11 is not limited thereto. The output wall 18 of the light guide member 11 may have a shape with a contour portion 18L extending substantially along the vehicle width direction at least on either the upper side or lower side of the incident portion 17. For example, the output wall 18 may have a shape with only a contour portion 18L extending linearly substantially along the vehicle width direction on the upper side or lower side of the incident portion 17.

### Reference Signs List

1...Turn signal lamp (vehicle lamp), 10...Light emitting element (light source), 11...Light guide member, 12...Lamp body unit, 13...Lamp housing, 13a...Base portion, 13b...Unit housing portion, 13c...Opening, 13cu...Upper side, 13ci, 13cj...Inclined side, 13cl...Lower side, 14...Outer lens, 14a...Lens main wall, 14b... Peripheral wall, 15...Substrate, 16...Shielding cover, 16a...Reflection surface covering portion, 17...Incident portion, 18...Output wall, 18L, 18La...Contour line, 19...Intermediate light guide wall, 20...First reflection surface, 21...Second reflection surface, 21a, 21a-1, 21a-2, 21a-3, 21a-4, 21a-5, 21a-s...Face element, 22, 22A...Step portion, 22r, 22Ar...Step portion ridge line, 23...Curved surface, 39...Support rib, 40...Abutting seat, 41...Boss portion, 42...Screw, 50...Output surface, 51...Diffuser, c...Center line in vehicle width direction, L1...First parallel light, L2...Second parallel light, L3...Bent reflected light, o...Axis (Radiation center), OL1, OL2, OL3...Contour portion

## Claims

1. A vehicle lamp device, comprising:
a light source; and
a light guide member, configured to guide light incident from the light source to an output surface facing in a vehicle front-rear direction,
wherein the light guide member comprises:
an incident portion, into which light from the light source is incident;
an output wall, having a contour portion extending substantially along a vehicle width direction at least in one of an upper side and a lower side of the incident portion, and having one end side facing a vehicle front-rear direction serving as the output surface;
an intermediate light guide wall, configured to guide light incident into the incident portion to other end side of the output wall facing a vehicle front-rear direction;
a first reflection surface, configured in an incident area of the intermediate light guide wall, which radially internally reflects light incident into the incident portion as a first parallel light towards other end side of the output wall; and
a second reflection surface, configured at the other end side of the output wall, which internally reflects the first parallel light as a second parallel light towards one end side of the output wall,
the second reflection surface is divided into a plurality of face elements by a plurality of step portions whose step portion ridge lines extend in a direction intersecting with a contour line following the contour portion, and
the plurality of face elements configured at positions distant from the first reflection surface in a vehicle width direction along the contour line are, when viewed in a vehicle front-rear direction, divided by the step portions whose step portion ridge lines are inclined at a constant angle with respect to the contour line.

2. The vehicle lamp device according to claim 1, wherein when using a center line in a vehicle width direction passing through a center of the first reflection surface as a reference, the face element positioned within a range where a central angle centered on a center of the first reflection surface does not exceed a predetermined angle is shaped such that, when viewed in a vehicle front-rear direction, a width in a direction along the contour line gradually increases from a side of the first reflection surface towards a side where the contour line is located.

3. A vehicle lamp device, comprising:
a light source; and
a light guide member, configured to guide light incident from the light source to an output surface facing in a vehicle front-rear direction,
wherein the light guide member comprises:
an incident portion, into which light from the light source is incident;
an output wall, having a contour portion extending substantially along a vehicle width direction in a vehicle width direction outer area of the incident portion, and having one end side facing a vehicle front-rear direction serving as the output surface;
an intermediate light guide wall, configured to guide light incident into the incident portion to other end side of the output wall facing a vehicle front-rear direction;
a first reflection surface, configured in an incident area of the intermediate light guide wall, which radially internally reflects light incident into the incident portion as a first parallel light towards other end side of the output wall; and
a second reflection surface, configured at the other end side of the output wall, which internally reflects the first parallel light as a second parallel light towards one end side of the output wall,
the second reflection surface is divided into a plurality of face elements by a plurality of step portions whose step portion ridge lines extend in a direction intersecting with a contour line following the contour portion, and
a curved surface with a larger curvature radius than other step portion ridge lines in a vehicle width direction outer area is provided on the step portion ridge line in contact with the face element located in a position close to the first reflection surface.

4. The vehicle lamp device according to claim 3, wherein when using a center line in a vehicle width direction passing through a center of the first reflection surface as a reference, the step portion ridge line on which the curved surface with a larger curvature radius is provided is positioned within a range where a central angle centered on a center of the first reflection surface does not exceed 45°.

5. The vehicle lamp device according to claim 3 or 4, wherein the step portion ridge line on which the curved surface with a larger curvature radius is provided is provided only on a vehicle width direction outer side with respect to a center line in a vehicle width direction passing through a center of the first reflection surface.

6. The vehicle lamp device according to claim 3 or 4, wherein the curved surface with a larger curvature radius internally reflects the first parallel light such that a final light emission direction from the light guide member is inclined 80° or more towards a vehicle width direction outer side with respect to a vehicle front-rear direction.
